# EUROPÄISCHE PATENTANMELDUNG

(11) **EP 0 656 327 A1**
(43) Veröffentlichungstag der Anmeldung: **07.06.1995**
(21) Anmeldenummer: 94890195.4
(22) Anmeldetag: 28.11.1994
(51) Int. Cl.: C04B 22/06, C04B 28/02, C04B 40/00, B28C 9/00

(54) **Zement zur Spritzbetonherstellung sowie Verfahren und Vorrichtung zum Herstellen von Spritzbeton aus diesem Zement**

(30) Priorität: 26.11.1993 AT 2399/93
(71) Anmelder: MOBIL CRETE SPEZIALBETON GESELLSCHAFT m.b.H., A-5105 Bergheim bei Salzburg (AT)
(72) Erfinder: Adlgasser, Günther, A-5400 Hallein (AT); Schmidt, Ullrich, A-5081 Anif (AT); Schögler, Günter, A-5212 Schneegattern 72 (AT)
(74) Vertreter: Hübscher, Heiner, Dipl.-Ing.

(57) **Zusammenfassung**

Zur rationellen Spritzbetonherstellung wird gips- und anhydritfreier Zement mit einem Zusatz eines mineralischen, pH-neutralen aluminiumoxid-hydroxidhältigen Abbindebeschleunigers verwendet, dem erdfeuchte Zuschlagstoffe zugemengt werden können.

## Beschreibung

Die Erfindung bezieht sich auf einen gips- und anhydritfreien Zement zur Spritzbetonherstellung und auf ein Verfahren und eine Vorrichtung zum Herstellen von Spritzbeton aus diesem Zement.

Bei üblichen Zementen dient der Gips- oder Anhydritgehalt zur Abbindeverzögerung, so daß solche Zemente praktisch nur unter Zusatz von Abbindebeschleunigern als Spritzzement geeignet sind. Allerdings wird durch den Beschleunigerzusatz die Festigkeit des erhärteten Betons beträchtlich verringert und zudem sind durch Undichtheiten im Beton Auswaschungen zu befürchten. Speziell zur Spritzbetonherstellung ist daher gemäß der AT-PS 382 859 auch bereits die Verwendung von gips- und anhydritfreiem Zement vorgeschlagen worden, der ohne die Abbindeverzögerer äußerst rasch aushärtet und keinen eigenen Zusatz von Beschleunigern erfordert. Dieser gips- und anhydritfreie Zement muß jedoch zur Spritzbetonherstellung mit getrockneten-Zuschlagstoffen, insbesondere feuergetrockneten Sanden od. dgl., vermengt werden, um durch die vorhandene Eigenfeuchtigkeit dieser Zuschlagstoffe eine vorzeitige Abbindereaktion des Zementes zu verhindern. Eine solche Vorreaktion kann nicht nur wegen einer Verklumpung u. dgl. das Zufördern des Trockenspritzbetons zur Spritzdüse behindern, sondern beeinträchtigt vor allem auch den eigentlichen Aushärtevorgang nach der Wasserzugabe, wodurch Qualitätsverluste des ausgehärteten Betons in Kauf zu nehmen sind. Darüber hinaus müssen die Zuschlagstoffe von ihrer Abbaustelle zu einer entsprechenden Trocknungsanlage und dann zusammen mit dem Zement zur Baustelle gebracht werden, was wegen der großen Transportwege und des Trocknungsvorganges recht aufwendig ist. Dazu kommt noch, daß die trockene Spritzbetonmischung bei der Verarbeitung zu einer starken Staubentwicklung führt, die gerade beim Einsatz von Spritzbeton für den Tunnelbau äußerst unangenehm und auch gesundheitsgefährdend ist.

Der Erfindung liegt daher die Aufgabe zugrunde, diese Mängel zu beseitigen und einen gips- und anhydritfreien Zement zu schaffen, der eine besonders rationelle Spritzbetonherstellung erlaubt. Außerdem soll ein Verfahren zur zweckmäßigen Herstellung von Spritzbeton aus diesem Zement und eine vorteilhafte Vorrichtung zum Durchführen dieses Verfahrens angegeben werden.

Zur Lösung dieser Aufgabe dient ein gips- und anhydritfreier Zement mit einem Zusatz eines mineralischen, pH-neutralen aluminiumoxid-hydroxidhältigen Beschleunigers. Dieser Zement bedarf einerseits keiner eigenen Abbindeverzögerer und läßt sich anderseits mit erdfeuchten Zuschlagstoffen vermengen, ohne dabei zumindest innerhalb einer entsprechenden Verarbeitungszeit nachteilige Wasser-Zementreaktionen befürchten zu müssen. Durch die Verwendung des speziellen mineralischen Beschleunigers werden außerdem die unerwünschten Begleiterscheinungen der bei herkömmlichem Zement eingesetzten aluminathältigen Beschleuniger vermieden, es kommt zu keiner Gesundheitsgefährdung durch diese Beschleuniger und nicht zuletzt wird auch das Eluatierverhalten des erhärteten Spritzbetons wesentlich verbessert. Da sich der Zement zum Vermengen mit erdfeuchten Zuschlagstoffen eignet, ist es nun nicht mehr notwendig, diese Zuschlagstoffe speziell in Trocknungsanlagen aufzubereiten, und sie können direkt von der nächstgelegenen Abbaustelle zur eigentlichen Baustelle gebracht werden. Das bedeutet eine beträchtliche Minderung des Transportaufwandes und des Energie- und Anlagenbedarfes für den Trocknungsvorgang und hilft außerdem, die Staubentwicklung zu verringern.

Eine zweckmäßige Zementmischung entsteht durch Vermahlung eines Klinkers mit einem Trikalziumaluminat-Gehalt von 9 - 12 Gew.% und einer spezifischen Oberfläche von 3000 - 7000 cm²/g, welchem Mahlgut Abbindebeschleuniger in einer Menge von 0,5 - 3 Gew.% zugesetzt werden.

Zur Verbesserung und Beeinflussung der Verarbeitungseigenschaften kann es außerdem zum zusätzlichen Einsatz von Kolloiden (Zellulosen) und Polyvinylacetat (PVA) in Mengen von 0,1 - 1,0 Gew.% kommen.

Bei der Trockenspritzbetonherstellung wird üblicherweise der Zement mit den Zuschlagstoffen unmittelbar nach deren Trocknung vermengt und das Gemenge mittels geeigneter Fahrzeuge zur Baustelle gebracht. Hier wird dieses Gemenge pneumatisch einer Spritzdüse zugefördert, in der Spritzdüse mit Wasser versetzt und aufgespritzt. Erfindungsgemäß ist es nun möglich, den Zement mit erdfeuchten Zuschlagstoffen unmittelbar vor dem Aufgabebereich der Pneumatikförderung zu vermengen, so daß sich die Beschaffung und Aufbereitung der Zuschlagstoffe wesentlich vereinfacht. Das Gemenge wird direkt an der Baustelle hergestellt und staubarm sofort nach dem Zusammenmengen zu hochwertigem Spritzbeton verarbeitet.

Günstig ist es, wenn Zuschlagstoffe mit einer Eigenfeuchtigkeit bis max. 6 Gew.% Wasser und/oder mit einem Größtkorn von 16 mm verwendet werden, was das Entstehen eines dichten, hochfesten Spritzbetons gewährleistet.

Beispiel: 350 kg Zement mit einer spez. Oberfläche von 4500 cm²/g und einem Gehalt von 9 % Trikalziumaluminat werden 0,8 % Aluminiumhydroxid und 0,1 % Polyvinylacetat zugesetzt. Diesem Zement werden 1800 kg Zuschlagstoffe mit einem Größtkorn von 8 mm und einer Eigenfeuchtigkeit von 2,5 % Wasser zugemischt und die entstehende Mischung wird sofort verspritzt.

Eine einfache Vorrichtung zur Spritzbetonherstellung besteht darin, daß bei einer pneumatischen Förderanlage, die eine von einer Aufgabeeinrichtung zu einer Spritzdüse führende Förderleitung aufweist, die Aufgabeeinrichtung einen Mischer umfaßt, der über Dosiervorrichtungen an eigene Aufnahmebehälter für Zement und Zuschlagstoffe angeschlossen ist. Dadurch braucht lediglich für eine entsprechende Beschickung der Aufnahmebehälter einerseits mit Zement und anderseits mit den Zuschlagstoffen gesorgt zu werden, und die Vorrichtung ist zum Aufbringen von Spritzbeton vorbereitet. Zement und Zuschlagstoffe werden im entsprechenden Mischungsverhältnis über die Dosiervorrichtung dem Mischer zugeleitet, in dem sie homogenisiert und gleichmäßig vermengt werden, worauf dieses Gemenge über die Aufgabeeinrichtung der Förderanlage zufließt. Die Förderanlage fördert das Gemenge zur Spritzdüse, über die es unter Wasserzugabe und gegebenenfalls unter Zugabe sonstiger Zusatzmittel als Spritzbeton verspritzt wird.

Besonders vorteilhaft ist es, wenn die Förderanlage samt Mischer und Aufnahmebehälter auf einem Fahrgestell aufgebaut ist, da so eine mobile Vorrichtung entsteht, die unmittelbar zum Verwendungsort des Spritzbetons herangebracht werden kann, was beispielsweise im Tunnelbau eine rationelle Arbeitsweise gewährleistet.

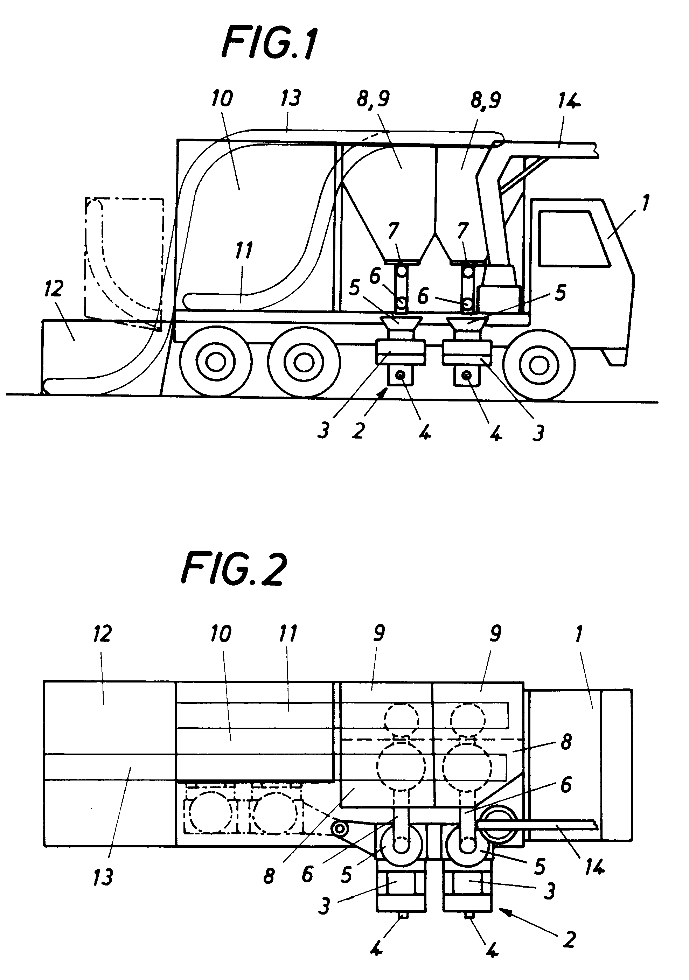

In der Zeichnung ist der Erfindungsgegenstand rein schematisch veranschaulicht, und zwar zeigen Fig. 1 und 2 eine erfindungsgemäße Vorrichtung zur Spritzbetonherstellung in Seitenansicht bzw. in Draufsicht.

Auf einem Fahrgestell 1, beispielsweise ein Lastkraftwagen, ist eine pneumatische Förderanlage 2 mit zwei Förderaggregaten 3 aufgebaut, die jeweils einen Förderleitungsanschluß 4 für eine nicht weiter dargestellte, zu einer Spritzdüse führende Förderleitung aufweisen. Den als Einlauftrichter ausgebildeten Aufgabeeinrichtungen 5 der Förderaggregate 3 sind Rohrschnecken 6 vorgeordnet, die über eine Dosiereinrichtung 7 an einen Aufnahmebehälter 8 für Zement und einen eigenen Aufnahmebehälter 9 für Zuschlagstoffe angeschlossen sind. Zur Befüllung dieser Behälter 8, 9 ist am Fahrgestell 1 ein Zement-Vorratsbehälter 10 aufgesetzt, der über eine entsprechende Beschickungseinrichtung 11 Zement in die Aufnahmebehälter 9 fördert, und ein Aufgabetrichter 12, der über eine Beschickungsvorrichtung 13 mit den Behältern 8 in Verbindung steht, erlaubt die Beschickung mit Zuschlagstoffen.

Wie strichpunktiert angedeutet, können der Aufgabetrichter 12 hochgeklappt und die Förderaggregate 3 der Förderanlage 2 in eine Transportstellung eingeschwenkt werden, so daß ein üblicher Fahrbetrieb des Fahrzeuges möglich ist. Das Fahrzeug 1 kann daher direkt auf eine Baustelle fahren und dort für das rationelle Herstellen und Aufbringen von Spritzbeton sorgen. Dazu werden gips- und anhydritfreier Zement mit einem Zusatz eines mineralischen Abbindebeschleunigers einerseits und erdfeuchte Zuschlagstoffe anderseits den Aufnahmebehältern 8, 9 entnommen und über die Dosiereinrichtungen 7 im erforderlichen Mischungsverhältnis der jeweiligen Rohrschnecke 6 zudosiert, in denen diese beiden Bestandteile miteinander vermischt und homogenisiert und nach einer Mischzeit von ca. 10 Sekunden der Förderanlage 2 zugebracht werden. Aus den Rohrschnecken gelangt das Gemenge durch die Aufgabeeinrichtungen 5 in die Förderaggregate 3, über die es mittels Druckluft durch die nicht weiter dargestellte Förderleitung der Spritzdüse zugefördert und dann unter Zugabe von Wasser als Spritzbeton verspritzt wird. Ein nur angedeuteter Kranausleger 14 erlaubt eine entsprechende Handhabung und Führung der Förderleitungen bzw. Spritzdüsen, die wegen des Vorhandenseins von zwei Förderaggregaten und zugehörenden Behältern, Dosiereinrichtungen und Mischern paarweise gleichzeitig eingesetzt werden können oder das Verspritzen unterschiedlichen Spritzbetons ermöglichen. Dabei lassen sich Zement und erdfeuchte Zuschlagstoffe direkt am Einsatzort vermengen was eine rationelle, staubarme und dabei hochwertige Spritzbetonherstellung gewährleistet.

## Patentansprüche

1. Gips- und anhydritfreier Zement zur Spritzbetonherstellung, gekennzeichnet durch den Zusatz eines mineralischen, pH-neutralen aluminiumoxid-hydroxidhältigen Abbindebeschleunigers.

2. Zement nach Anspruch 1, gekennzeichnet durch Mahlgut eines Klinkers mit einem Trikalziumaluminat (C3A)-Gehalt von 9 - 12 Gew.% (nach Bogne) und mit einer spezifischen Oberfläche von 3000 - 7000 cm²/g (nach Blaine), dem Abbindebeschleuniger in einer Menge von 0,5 - 3 Gew.% zugesetzt sind.

3. Zement nach Anspruch 1 oder 2, gekennzeichnet durch einen zusätzlichen Einsatz von Kolloiden (Zellulosen) und Polyvinylacetat (PVA) in Mengen von 0,1 - 1,0 Gew.%.

4. Verfahren zum Herstellen von Spritzbeton aus Zement nach einem der Ansprüche 1 bis 3, nach dem der Zement mit Zuschlagstoffen vermengt und dann das Gemenge pneumatisch einer Spritzdüse zugefördert und durch diese unter Wasserzugabe verspritzt wird, dadurch gekennzeichnet, daß der Zement mit den Zuschlagstoffen erst im Aufgabebereich der Pneumatikförderung vermengt wird, wobei erdfeuchte Zuschlagstoffe verwendet werden.

5. Verfahren nach Anspruch 4, dadurch gekennzeichnet, daß Zuschlagstoffe mit einer Eigenfeuchtigkeit bis max. 6 Gew.% Wasser und/oder mit einem Größtkorn von 16 mm verwendet werden.

6. Vorrichtung zum Durchführen des Verfahrens nach Anspruch 4 oder 5, mit einer pneumatischen Förderanlage (2), die eine von einer Aufgabeeinrichtung (5) zu einer Spritzdüse führende Förderleitung aufweist, dadurch gekennzeichnet, daß die Aufgabeeinrichtung (5) einen Mischer (6) umfaßt, der über Dosiervorrichtungen (7) an eigene Aufnahmebehälter (8, 9) für Zement und Zuschlagstoffe angeschlossen ist.

7. Vorrichtung nach Anspruch 6, dadurch gekennzeichnet, daß die Förderanlage (2) samt Mischer (6) und Aufnahmebehälter (8, 9) auf einem Fahrgestell (1) aufgebaut ist.
